# EUROPÄISCHE PATENTANMELDUNG

(11) **EP 0 969 688 A2**
(43) Veröffentlichungstag der Anmeldung: **05.01.2000**
(21) Anmeldenummer: 99250211.2
(22) Anmeldetag: 25.06.1999
(51) Int. Cl.: H04Q 11/04

(54) **Verfahren zur Steuerung bestimmter Modi oder Funktionen eines an einen ISDN Bus angeschlossenen Endgerätes**

(30) Priorität: 30.06.1998 DE 19830068
(71) Anmelder: Teles AG Informationstechnologien, 10587 Berlin (DE)
(72) Erfinder: Illg, Andreas, 10555 Berlin (DE); Wegener, Rochus, 13503 Berlin (DE)
(74) Vertreter: Müller, Wolfram Hubertus, Dipl.-Phys.

(57) **Zusammenfassung**

Die Erfindung betrifft ein Verfahren und eine Telekommunikationsanordnung zur Steuerung bestimmter Modi oder Funktionen eines an einen Bus angeschlossenen ersten Endgerätes in Abhängigkeit von für das Endgerät bestimmten Signalisierungsinformationen, die auf dem Bus übertragen werden. Erfindungsgemäß wertet ein weiteres am Bus angeschlossenes Endgerät ankommende, für das erste Endgerät bestimmte Signalisierungsinformationen aus und erzeugt in Abhängigkeit von dem Ergebnis der Auswertung ein Steuersignal, das über den Bus übertragen und von einer Schnittstellenkarte des ersten Endgerätes als Steuerbefehl erkannt wird, worauf ein bestimmter Modus oder eine bestimmte Funktion des Endgerätes ausgelöst wird. Eine bevorzugte Anwendung liegt in der Steuerung des Stromsparmodus eines an einen Bus angeschlossenen Computers.

## Beschreibung

### Gegenstand der Erfindung

Die Erfindung betrifft ein Verfahren zur Steuerung bestimmter Modi oder Funktionen eines an einen Bus angeschlossenen Endgerätes nach dem Oberbegriff des Anspruchs 1 und eine Telekommunikationsanordnung zur Durchführung des Verfahrens.

### Hintergrund der Erfindung

Personal Computer (PC's) mit Stromsparmodus bzw. Power Management erfreuen sich zunehmender Beliebtheit. Insbesondere bei batteriebetriebenen PC's wie Notebooks ist der Einsatz eines Stromsparmodus standardgemäß vorgesehen, um die Betriebszeit des Computers zu erhöhen. Ein Stromsparmodus ist jedoch auch bei aus einem Stromnetz gespeisten Computern sinnvoll, um die Stromkosten zu senken.

Es sind im Stand der Technik zahlreiche Anordnungen bekannt, die einen Stromsparmodus realisieren. Beispielsweise beschreibt die US-PS 4,851,987 eine Anordnung, bei der der Stromverbrauch des Hauptprozessors durch Abschalten der Prozessoruhr reduziert wird. Die Prozessoruhr wird immer dann abgeschaltet, wenn für eine bestimmte Zeit keine Befehlsfolgen durch den Prozessor abgearbeitet werden. Bei einem neuen Vorgang sendet ein Hardware-Baustein oder ein Peripheriegerät ein Interrupt-Signal an den Prozessor bzw. die Prozessoruhr, wodurch der Stromsparmodus abgestellt bzw. ein Takten des Prozessor wieder aufgenommen wird. Über bestimmte Programme kann dabei spezifiziert werden, unter welchen Bedingungen ein Interrupt zur Beendigung des Stromsparmodus ausgelöst wird.

Der Einsatz von PC's mit Power Management führt jedoch zu unbefriedigenden Ergebnissen bei Anschluß eines PC's an einen ISDN-S₀-Bus. Überlicherweise ist ein PC über eine passive IDSN-Karte an einen ISDN-S₀-Bus angeschlossen. Die ISDN-Karte weist einen ISDN-Controller auf, der ein Interrupt-Signal zur Beendigung des Stromsparmodus erzeugen kann. Übliche ISDN-Controller aktivieren dieses Signal bei Anderungen des Aktivierungszustandes des S₀-Busses, bei Empfang eines Datenpaketes, bei Beendigung des Versandes eines Datenpaketes oder bei internen Ereignissen, die der Kommunikation mit anderen Controllern auf der gleichen ISDN-Karte dienen.

Es ist erstrebenswert, einen PC nur bei ankommenden Anrufen (zur Übertragung von Daten, zur Computertelefonie etc.) aus dem Stromsparmodus aufzuwecken. Die bekannten Controller passiver ISDN-Karten wecken einen PC in der Regel jedoch viel zu häufig auf. So erzeugt ein parallel am S₀-Bus angeschlossenes Gerät bei abgehenden Rufen sowohl ggf. eine Änderung des Aktivierungszustandes des S₀-Busses als auch einen Datenverkehr auf dem D-Kanal. Der Computer wird somit sowohl bei abgehenden Rufen anderer Endgeräte als auch bei eingehenden Anrufen für andere Endgeräte ohne Grund aufgeweckt. Dieser Zustand ist unbefriedigend.

Die Situation ist noch verschäft bei Nebenstellanlagen, die in der Regel jede Minute auf dem ISDN D-Kanal die aktuelle Uhrzeit an alle Geräte des S₀-Busses rundsenden. Der PC kommt dann gar nicht mehr zur Ruhe.

Eine Abhilfe des aufgezeigten Problems bietet eine aktive ISDN-Karte, die einen eigenen Prozessor auf der Karte enthält. Dieser kann das ankommende Paket aus dem ISDN-Controller auslesen, den Inhalt bewerten und überprüfen, ob ein ankommender Anruf an den PC vorliegt. Erst dann wird entschieden, ob der Hauptprozessor des PC durch ein Interrupt-Signal aufgeweckt wird oder nicht. Aktive ISDN-Karten sind aufgrund der Tatsache, daß sie einen eigenen Prozessor enthalten, jedoch teuer, so daß diese Lösung wirtschaftlich meist nicht in Frage kommt.

Das aufgezeigte Problem läßt sich auch durch einen ISDN-Controller lösen, der ankommende D-Kanal Datenpakete mit einer Tiefe erfaßt, daß auch Nachrichten der OSI Schicht 3, wie die gerufene Nummer, ausgewertet werden können. Derartige ISDN-Controller sind jedoch ebenfalls teuer und stellen keine wirtschaftlich sinnvolle Lösung dar.

Übliche ISDN-Controller wie der Controller Nr. PSB 2186 der Firma Siemens können lediglich die ersten beiden Bytes eines Datenpaketes auswerten. Der Vergleich der ersten zwei Bytes eines Datenpaketes hilft bei einer Lösung des vorliegenden Problems jedoch nicht, da ankommende Rufe mit Rundsenden an alle Endeinrichtungen gesendet werden und der Inhalt der ersten beiden Bytes in einem solchen Fall keine endgerätetypische Information, die ausgewertet werden könnte, enthält.

Die DE 195 12 204 A1 beschreibt eine Überwachungseinheit für die Stromversorgung eines PC, die in den PC integriert ist und den Datenverkehr zum PC hin überwacht. Im Falle eines Datenübertragung wird die Stromversorgung aktiviert und damit der PC eingeschaltet.

### Aufgabe der Erfindung

Der Erfindung liegt die Aufgabe zugrunde, ein Verfahren und eine Telekommunikationsanordnung der eingangs genannten Art zur Verfügung zu stellen, die eine Steuerung eines an einen Bus angeschlossenen Endgerätes ermöglichen, ohne hierbei teure Hardware an der Schnittstelle des Endgerätes zum Bus einzusetzen. Insbesondere soll ein Aufwecken eines an einen Bus angeschlossenen Computers aus dem Stromsparmodus nur für den Fall, daß ein Verbindungswunsch mit dem Computer vorliegt, ermöglicht werden.

### Zusammenfassung der Erfindung

Diese Aufgabe wird erfindungsgemäß durch ein Verfahren mit den Merkmalen des Anspruchs 1 und eine Telekommunikationsanordnung mit den Merkmalen des Anspruchs 13 gelöst.

Der vorliegenden Erfindung liegt der Gedanke zugrunde, die Auswertung bzw. Überprüfung ankommender Signalisierungsinformationen für ein bestimmtes Endgerät nicht durch die Schnittstellenkarte dieses Endgerätes, sondern durch ein anderes, an den Bus angeschlossenes Endgerät durchzuführen, so daß auf die entsprechende Intelligenz an der Schnittstellenkarte verzichtet werden kann. Insbesondere kann eine Schnittstellenkarte damit als passive Karte ohne eigenen Prozessor ausgebildet werden. Bei dem überprüfenden Endgerät kann es sich um eine gesonderte, aktive Box am Bus oder eine in ein anderes Gerät wie ein Telefon oder einen Terminaladapter intergrierte Einheit handeln.

Erfindungsgemäß wird somit die Intelligenz bzw. der Prozessor eines (ohnehin) am Bus angeschlossenen Endgerätes zur Überprüfung und Auswertung der Signalisierungsinformationen verwendet, so daß auf eine derartige Intelligenz auf der Schnittstellenkarte des betrachteten Endgeräts verzichtet werden kann. Dies führt zu einer erheblichen Kostenersparung.

Die Schnittstellenkarte benötigt lediglich ausreichend Intelligenz, um in beschränktem Umfange Steuersignale, die vom die Überprüfung durchführenden Endgerät über den Bus ausgesendet werden, auszuwerten. Hierbei reicht es bei vielen Anwendungen aus, wenn jeweils die ersten beiden Bytes eines Datenpakets ausgewertet werden. Dies ist mit üblichen, im Markt preiswert erhältlichen Controllern problemlos möglich.

Die Erfindung ermöglicht eine Steuerung bestimmter Modi oder Funktionen eines an einen Bus angeschlossenen ersten Endgerätes, wobei auf eine aufwendige und teuere Ausgestaltung der Hardware der Schnittstellenkarte verzichtet werden kann. Eine zu steuernder Modus ist beispielsweise der Stromsparmodus eines Personal Computers.

So betrifft eine bevorzugte Ausgestaltung des erfindungsgemäßen Verfahrens die Steuerung des Stromsparmodus eines an den Bus angeschlossenen Computers. Dabei werden ankommende Signalisierungsinformationen durch das überprüfende Endgerät dahingehend ausgewertet, daß überprüft wird, ob die Signalisierungsinformationen für den Computer bestimmt sind. Bei einem positiven Ergebnis der Überprüfung wird ein Steuersignal erzeugt und über den Bus übertragen, das eine Schnittstellenkarte des Computers als Befehl zum Beenden des Stromsparmodus des Computers erkennt. Daraufhin wird eine Beendigung des Stromsparmodus ausgelöst.

Eine entsprechende Telekommunikationsanordnung ist derart ausgebildet, daß das überprüfende Endgerät Auswertmittel zum Auswerten bzw. Überprüfen ankommender Signalisierungsinformationen dahingehend, ob ein Verbindungsaufbau zum Computer erfolgen soll, und Steuermittel zur Erzeugung eines Steuersignals in Abhängigkeit von dem Ergebnis der Überprüfung aufweist. Der Computer bzw. die Schnittstellenkarte weist Erkennungsmittel auf, die ein entsprechendes Steuersignal des überprüfenden Endgerätes erkennen und bei Vorliegen eines derartigen Steuersignal ein Abschalten des Stromsparmodus des Computers auslösen.

Es wird darauf hingewiesen, daß es sich bei dem zu steuernden Endgerät um eine beliebige Telekommunikations- oder Datenendeinrichtung handeln kann. Neben einem Computer oder Personal Computer kann es sich bei dem Endgerät etwa um einen Drucker oder ein Faxgerät handeln, dessen Modi oder Funktionen gesteuert werden. Beispielsweise wird der Stromsparmodus eines Druckers oder Faxgerätes gesteuert.

Weiter wird des weiteren darauf hingewiesen, daß die Erfindung nicht auf die ISDN-Technik und an einem S₀-Bus angeschlossene Endgeräte und Computer beschränkt ist. Sie umfaßt auch die Steuerung bestimmter Modi oder Funktionen an ein LAN oder WAN Netzwerk angeschlossener Komponenten, wobei die Schnittstellenkarte dann als Netzwerkkarte ausgebildet ist.

Bevorzugte und vorteilhafte Ausgestaltungen des erfindungsgemäßen Verfahrens und der erfindungsgemäßen Telekommunikationsanordnung sind in den Unteransprüche angegeben.

### Beschreibung mehrerer Ausführungsbeispiele

Die Erfindung wird nachfolgend unter Bezugnahme auf die Figuren der Zeichnung anhand mehrerer Ausführungsbeispiele näher erläutert. Es zeigen:
- Figur 1 -: eine erfindungsgemäße Anordnung mehrerer Endgeräte und eines Personal Computers an einem ISDN-Teilnehmeranschluß;
- Figur 2 -: schematisch den Aufbau einer passiven ISDN-Karte
- Figur 3 -: einen erfindungsgemäßen Befehlsablauf an einem Endgerät, das ein Vorliegen von Signalisierungsinformationen für den PC überprüft;
- Figur 4 -: einen ersten erfindungsgemäßen Befehlsablauf an einer ISDN-Karte des Personal Computers;
- Figur 5 -: einen zweiten erfindungsgemäßen Befehlsablauf an einer ISDN-Karte des Personal Computers;
- Figur 6 -: eine alternative Anordnung mehrerer Endgeräte und eines Personal Computers an einem ISDN-Teilnehmeranschluß, wobei ein Endgerät und der Personal Computer über eine direkte Signalleitung miteinander verbunden sind und
- Figur 7 -: schematisch ein SETUP-Protokolldatenelement.

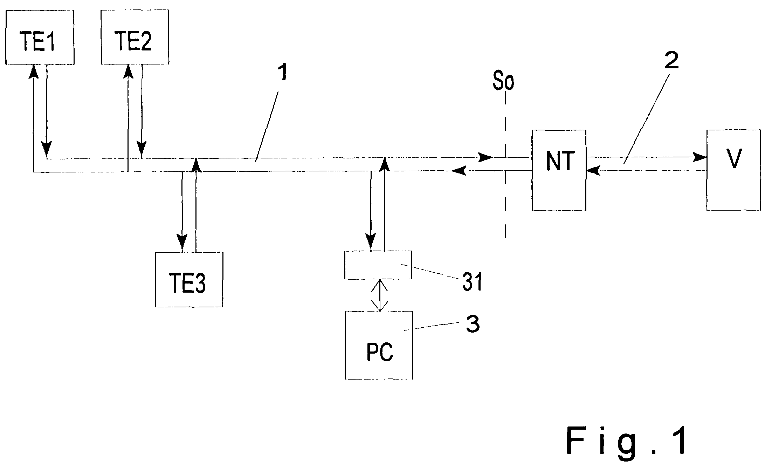

Figur 1 zeigt eine erfindungsgemäße Anordnung an einem ISDN-Teilnehmeranschluß, bei der drei Endgeräte TE1, TE2, TE3 und ein Personal Computer (PC) 3 über einen S₀-Bus 1 an einen Netzabschluß NT angeschlossen sind. Bei den Endgeräten handelt es sich etwa um ein ISDN-Telefon, ein ISDN-Faxgerät oder einen Terminaladapter bzw. ab-Adapter.

Der Netzabschluß NT ist in an sich bekannter Weise über eine Anschlußleitung 2 mit einer Vermittlungsstelle V eines Kommunikationsnetzes verbunden, Zwischen dem Netzabschluß NT und den Endgeräten befindet sich der standardisierte Bezugspunkt S, an dem eine physikalische, standardisierte Schnittstelle S₀ ausgebildet ist, an der die Endgeräte TE1, TE2, TE3 und der PC 3 über den S₀-Bus 1 angeschlossen sind.

An der S₀-Schnittstelle wird je Übertragungsrichtung ein Adernpaar verwendet, wobei in Figur 1 jedes Adernpaar als einfache Linie dargestellt ist. Der genaue Aufbau und die Funktionsweise derartiger ISDN-Anschlüsse sind dem Fachmann bekannt. Über den ISDN D-Kanal werden Signalisierungsinformationen in Form von standardisierten Protokolldatenelementen (nachfolgend auch als D-Kanal Datenpakete oder als Datenpakete bezeichnet) zwischen den Endgeräten und dem Netzabschluß NT bzw. der Vermittlungsstelle V übertragen.

Der PC 3 ist in über eine ISDN-Karte 31, die als interne Karte (Einsteckkarte) oder externe Karte (auch ISDN-Adapter genannt) ausgebildet sein kann, mit dem S₀ Bus verbunden. Die ISDN-Karte 31 ist als passive Karte ausgebildet, d.h. die Karte weist keinen eigenen Prozessor auf und bedient sich zur Abwicklung notwendinger Steuer- und Datenkanalprotokolle des Prozessors des PC's 3. Derartige passive Karten sind an sich bekannt.

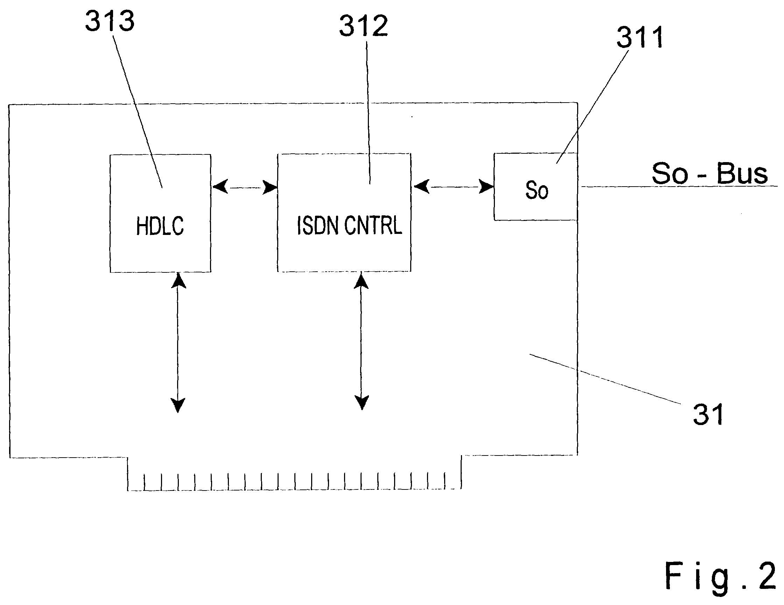

Wie in Fig. 2 schematisch dargestellt, weist die passive ISDN-Karte 31 under anderem eine S₀-Schnittstelle 311 zum S₀-Bus, einen ISDN Controller 312 und einen HDLC Baustein 313 auf. Der ISDN Controller 312 trennt die beiden B-Kanäle und den D-Kanal, puffert eingehende und ausgehende Daten und sendet Interrupt-Signale an den Prozessor. Diese Interrupt-Signale werden als Befehle zur Aktivierung des Hauptprozessors des PC's 3 des Computers bzw. von einem Power-Management als Befehle zur Beendigung des Stromsparmodus (auch "Standby" oder "Suspend" Modus genannt) aufgefaßt.

Bei dem Controller 312 handelt es sich beispielsweise um den ISDN Controller PSB 2186 der Firma Siemens.

Alternativ erfolgt eine Beendigung des Stromsparmodus nicht bei Vorliegen eines Interrupt-Signals, sondern wird hierzu von einem geeigneten Controller ein gesondertes Power-Management Signal an der Prozessor gesandt. Das Power-Management Signal wird dabei immer dann ausgesandt, wenn D-Kanal Datenpakete eingehen. Controller, die Power-Management Signale erzeugen können, werden insbesondere an einem PCI-Bussystem eingesetzt.

Der HDLC-Baustein 313 dient insbesondere als Puffer für die Daten der beiden B-Kanäle. Sowohl der Controller 312 als auch der HDLC-Baustein 313 sind, wie angedeuted, direkt mit dem Prozessor des PC verbunden, d.h. der Endgeräteprozessor hat direkten Zugriff auf diese beiden Bausteine.

Bei einem Verbindungswunsch eines rufenden Teilnehmers sendet die Vermittlungsstelle V ein standardgemäßes SETUP Datenelement an alle am S₀-Bus angeschlossenen Endgeräte TE1, TE2, TE3 einschließlich des Computers 3. Gemäß dem Stand der Technik sendet der Controller 311 bei Empfang eines SETUP Datenelements ein Interrupt (alternativ: ein Power-Management Signal) an den Prozessor des PC 3. Dadurch wird der Stromsparmodus deaktiviert. Dies ist unbefriedigend, da möglicherweise etwa durch die Dienstekennung des SETUP Datenelementes bereits ausgeschlossen ist, daß der Verbindungswunsch sich an den PC richtet. Diese Information kann der Controller 312 jedoch nicht erfassen bzw. auswerten, wie nachfolgend erläutert wird.

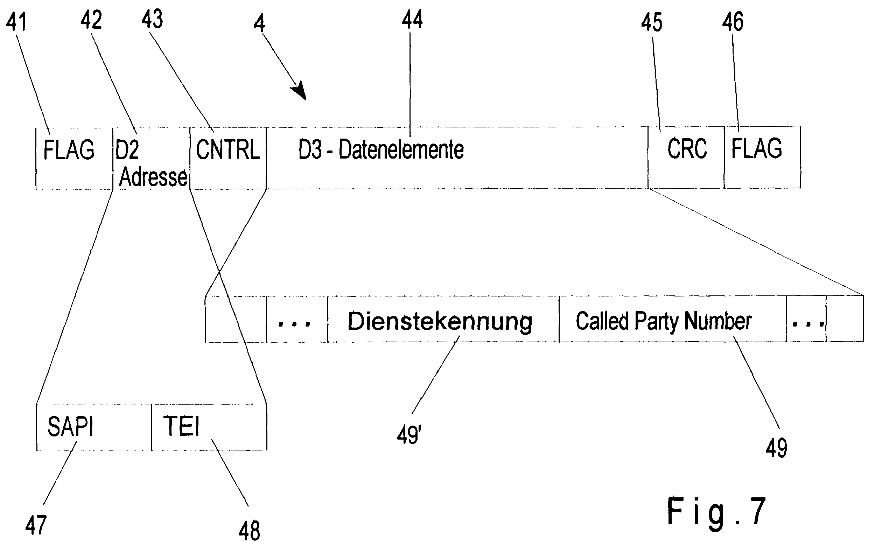

Ein SETUP-Protokolldatenelement besteht gemäß Fig. 7 in der D2-Schicht des OSI-Referenzmodells aus einem Rahmen 4, der sich aus einem FLAG 41, einer D2-Adresse 42, einem Control-Byte 43, einem Informationsfeld 44 mit den Protokolldatenelementen der D3-Schicht, einem oder zwei Prüf-Bytes CRC 45 (CRC = CYCLIC REDUNDANCY CHECK) und einem endständigen FLAG 46 zusammensetzt. Die D2-Adresse 42 setzt sich aus einem SAPI-Byte 47 und einem TEI-Byte 48 zusammen.

Mit Hilfe des SAPI (Service Access Point Identifier) wird eine Beziehung zu einer D3-Instanz oder zu der Management-Instanz hergestellt. Der TEI 48 (Terminal Endpoint Identifier) legt eine Endeinrichtungs-Identität fest, durch die das Endgerät für die Vermittlungsstelle V eindeutig festgelegt wird.

Das Informationsfeld 44 weist D3-Protokolldatenelemente auf, wobei im vorliegenden Zusammenhang von Bedeutung ist, daß neben Protokolldatenelementen wie der Transaktionsnummer (CALL REFERENCE) die Dienstekennung 49' und die Zieladresse 49 (Called Party Number) und enthalten sind. Die Dienstekennung gibt die Art der zu übertragenen Daten an (etwa: Telefonie, Faxdaten, Bildetelefon, Datenübertragung mit 64 kbit/s). Der genaue Aufbau eines SETUP Protokolldatenelementes ist dem Fachmann bekannt.

Der Controller im Ausführungsbeispiel kann lediglich die beiden ersten Bytes 42 (das FLAG Byte 41 nicht mitgezählt) auswerten, also die SAPI und den TEI erkennen. Dies hilft im vorliegenden Zusammenhang jedoch nicht, da die Vermittlungsstelle bei einem ankommenden Ruf das SETUP Datenelement an alle Endgeräte rundsendet und den TEI dabei auf den Wert "127" setzt. Der TEI enthält damit keine endgerätespezifische Information.

Das gleiche Problem ergibt sich bei anderen standardgemäßen Protokolldatenelementen, die von der Vermittlungsstelle V, dem Netzabschluß NT oder einem Endgerät rundgesendet werden (d.h., der TEI wird auf den Wert "127" gesetzt) und nicht für den PC bestimmt sind. Der PC wird ohne Grund aufgeweckt. Insbesondere bei einem regelmäßigem Rundsenden der Uhrzeit an alle Endgeräte, wie es bei einer Nebenstellanlage bzw. Telekommunikationsanlage üblich ist, wird der PC permanent grundlos aufgeweckt.

Lediglich für den Fall, daß das D-Kanal Datenpaket den TEI Wert des angesprochenen Endgerätes enthält, kann bereits der Controller 312 filtern, ob Daten für den PC bestimmt sind und ggf. den PC aufwecken.

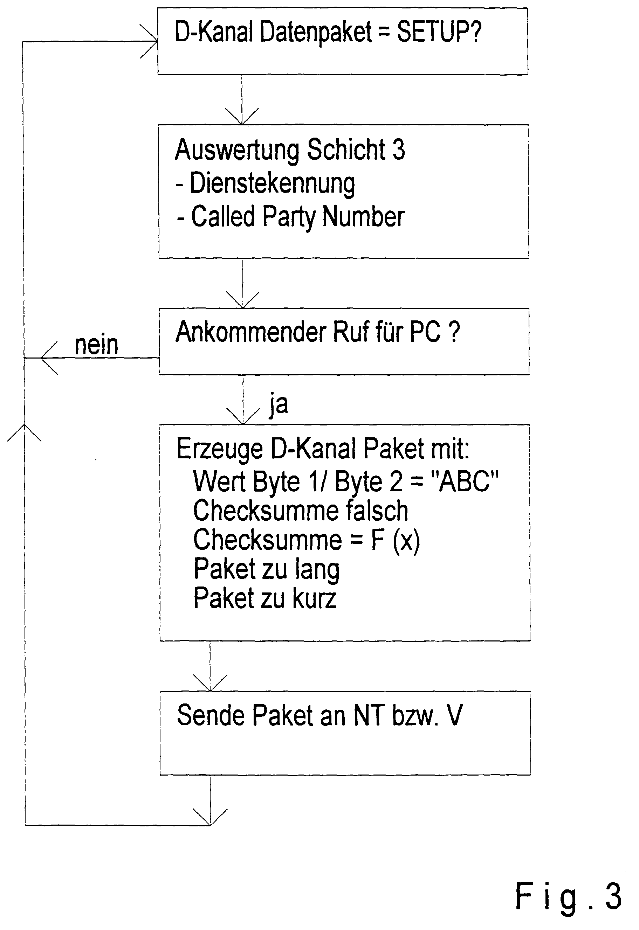

Das erfindungsgemäße Verfahren wird nun anhand der Figuren 3 bis 5 erläutert. Eine ankommende Signalisierungsinformation, etwa ein von der Vermittlungsstelle V gesendetes SETUP, wird nicht von der ISDN-Karte 31 ausgewertet, sondern durch ein anderes an den S₀-Bus angeschlossenes Endgerät. Beispielsweise handelt es sich bei dem Endgerät TE3 um ein ISDN-Telefon, das die Auswertung der Signalisierungsinformationen für den PC 3 übernimmt.

Dabei weist das Telefon TE3 Auswertmittel zum Überprüfen bzw. Auswerten ankommender Signalisierunysbefehle dahingehend, ob ein Verbindungsaufbau zum Computer erfolgen soll, und Steuermittel zur Erzeugung eines Steuersignals in Abhängigkeit von dem Ergebnis der Überprüfung auf. Die Auswertmittel (Überprüfungsmittel) und Steuermittel sind jeweils der Prozessor des ISDN-Telefons in Verbindung mit geeigneter Software. Bei Verwendung etwa eines ISDN Telefax-Gerätes als überprüfendes Gerät stellt der Prozessor des Telefax-Gerätes in Verbindung mit geeigneter Software die Überprüfungs- und Steuermittel dar. Wesentlich ist allerdings, daß das überprüfende Endgerät über ein aktives Element wie einen Prozessor verfügt, der es erlaubt, die Signalisierungsinformationen der D-Kanal Datenpakete auszuwerten.

Gemäß Fig. 3 prüft das Endgerät TE3 zunächst, ob überhaupt ein SETUP Datenpaket (oder ein anderes D-Kanal Paket) vorliegt. Sofern dies der Fall ist, wertet der Prozessor des Endgeräts TE3 die Schicht 3 Information 44 (vgl. Figur 7) des SETUP aus. Dabei wird insbesondere die Zieladresse 49 (Called Party Number) und die Dienstekennung 49' ausgewertet. Die Überprüfung der Zieladresse 49 ergibt, ob der PC überhaupt angerufen wird oder ein anderes Endgerät am Bus. Die Überprüfung der Dienstekennung 49' ermöglicht eine weitere Diskriminierung dahingehend, ob der verlangte Dienst vom PC überhaupt zur Verfügung gestellt werden kann. Beispielsweise ist ein PC ohne besondere Einrichtungen zur Computer-Telefonie nicht geeignet, ein Telefongespräch anzunehmen.

Wenn die Auswertung beider Informationen ergibt, daß der PC den Verbindungswunsch annehmen kann, erzeugt der Prozessor des Endgeräts TE3 zusammen mit geeigneter Software ein Steuersignal. Dabei handelt es sich in einer Variante der Erfindung um ein D-Kanal Datenpaket, das ein definiertes Merkmal aufweist, durch das eine Informationsübertragung zur Schnittstellenkarte 31 des PC kodiert wird. Bei diesem Merkmal handelt es sich beispielsweise um
- einen bestimmten, festgelegten Wert des ersten Bytes (also des SAPI) und/oder des zweiten Bytes (also des TEI) des D-Kanal Datenpakets;
- ein Datenpaket mit einer falschen Checksumme;
- ein Datenpaket, dessen Checksumme mit einer vom Standard abweichenden Formel (in Fig. 3 durch F(x) angedeuted) berechnet ist;
- ein gegenüber dem Standard zu langes Datenpaket oder
- ein gegenüber dem Standart zu kurzes Datenpaket.

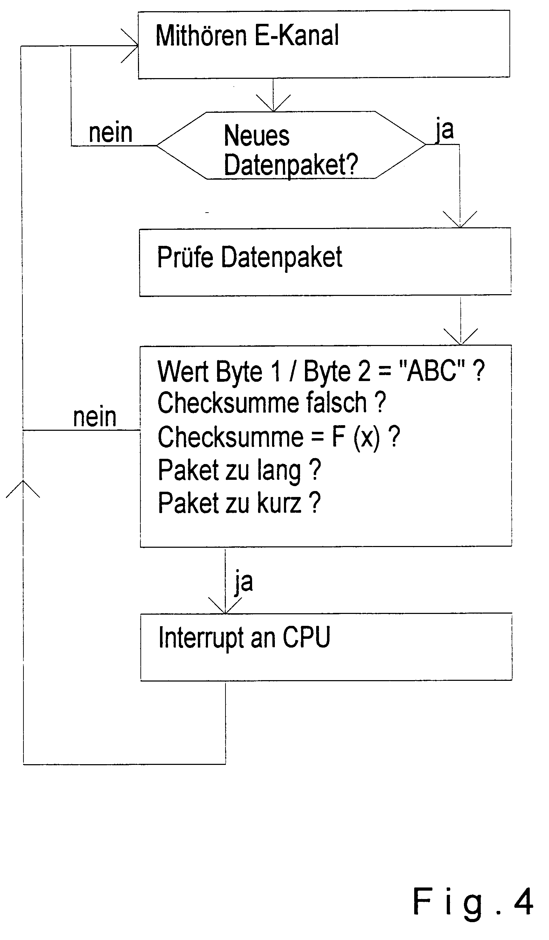

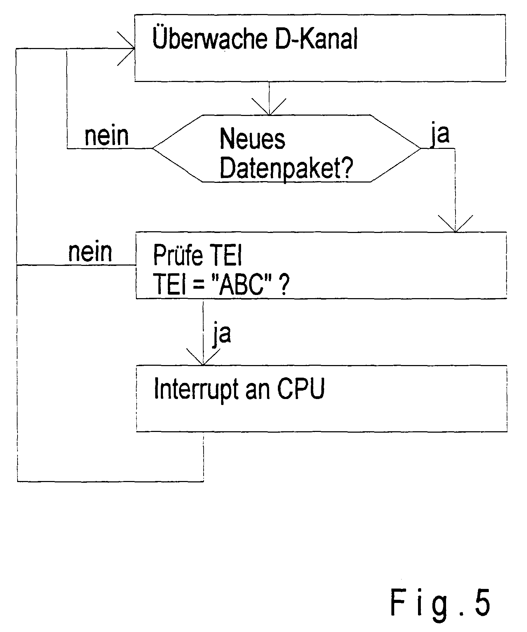

Dieses mit einem definierten Merkmal versehene Datenpaket wird über den D-Kanal vom Endgerät an die Vermittlungsstellle V gesandt. Der weitere Verfahrensablauf ergibt sich aus den Figuren 4 und 5.

Die ISDN-Karte 31 bzw. der ISDN-Controller 312 erfaßt die an die Vermittlungsstelle V gesendeten Datenpakete anderer Endgeräte durch "Mithören". Zum Mithören der ausgesandten Signalisierungsbefehle wertet die ISDN-Karte den E-Kanal (auch Echo-D-Kanal genannt) aus, auf dem der Netzabschluß NT standardgemäß den von den Endeinrichtungen stammenden D-Kanal-Inhalt zu den Endeinrichtungen zurückschleift.

Alternativ wertet die ISDN-Karte direkt den D-Kanal aus, wobei die ISDN-Karte jedoch einen eigenen Empfänger für das Mithören in Senderichtung aufweisen muß, was an sich nicht vorgesehen ist.

Der ISDN Controller 312 wertet nun das mitgehörte Datenpaket aus und überprüft, ob eines der oben in Bezug auf Fig. 3 erläuterten definierten Merkmale vorliegt. Sofern dies der Fall ist, erzeugt der Controller 312 einen Interrupt an den Prozessor des PC, wodurch dieser aus dem Stromsparmodus aufgeweckt wird. Der Verbindungswunsch wird daraufhin in an sich bekannter Weise durch den PC entgegengenommen.

In der leicht alternativen Variante der Figur 5 wird nicht ein Datenpaket des E-Kanals, sondern ein Datenpaket des D-Kanals ausgewertet. Das Datenpaket enthält dabei im zweiten Byte einen durch das überprüfende Endgerät festgelegten Wert für den TEI (in Fig. 5 symbolisch als "ABC" bezeichnet). Das D-Kanal Datenpaket wird vom überprüfenden Endgerät an die zugehörige Vermittlungsstelle V gesendet und von der Vermittlungsstelle V standardgemäß mit einem Datenpaket mit identischem TEI beantwortet. Der Controller 312 empfängt und überprüft das Datenpaket und erzeugt bei Vorliegen des festgelegten Wertes des TEI ein Interrupt an den Prozessor des PC's.

Weitere Möglichkeiten der Informationsübertragung zwischen dem Endgerät TE3 und ISDN-Karte 31 des PC's 3 sind in der deutschen Patentschrift DE 195 31 948 C1 beschrieben.

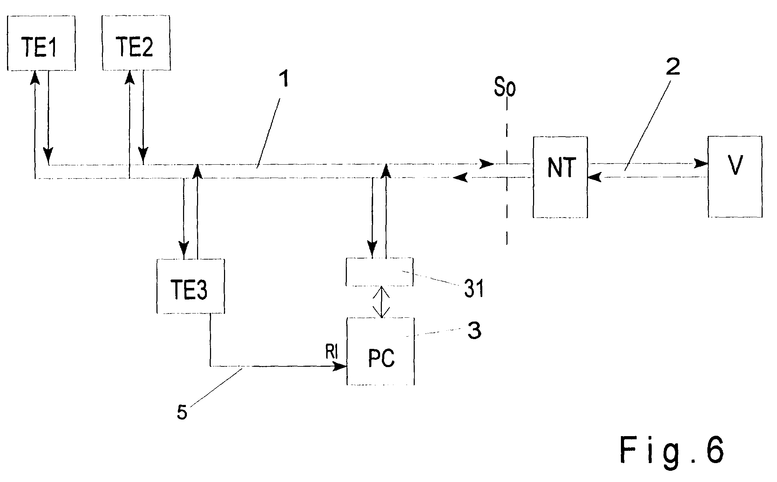

In der alternativen Anordnung der Fig. 6 ist das überprüfende Endgerät TE3 über eine gesonderte Signalleitung 5 mit dem PC 3 verbunden. Die Signalleitung ist etwa an die Ring Indicator-Leitung RI einer seriellen Schnittstelle eines PC oder PCMIA Steckplatzes des PC 3 angeschlossen. Das Signal RI zeigt dem PC üblicherweise an, das beim PC ein Läutsignal eingeht. Ein Signal auf dem Leitung RI kann der PC dann direkt dahingehend auswerten, daß der Stromsparmodus beendet werden soll. Diese Variante kommt ohne die Erzeugung von kodierten D-Kanal Signalen für die ISDN-Schnittstelle 312 aus. Vielmehr ist das Steuersignal des überprüfenden Endgeräts in diesem Fall ein auf die Leitung 5 gegebenes Signal.

Es wird darauf hingewiesen, daß das überprüfende Endgerät auch als eigene, aktive Box am S₀-Bus ausgebildet werden kann und nicht notwendigerweise in andere Endgeräte integriert ist.

Die Erfindung beschränkt sich in ihrer Anwendung nicht auf die vorstehend genannten Ausführungsbeispiele. Wesentlich für die Erfindung ist allein, daß eines der an den Bus angeschlossenen Endgeräte für ein anderes Endgerät bestimmte Signalisierungsinformationen auswertet und in Abhängigkeit von dem Ergebnis der Auswertung ein Steuersignal erzeugt, das eine Schnittstellenkarte des anderen Endgerätes als Steuerbefehl erkennt, worauf ein bestimmter Modus oder eine bestimmte Funktion ausgelöst wird.

## Patentansprüche

1. Verfahren zur Steuerung bestimmter Modi oder Funktionen eines an einen Bus angeschlossenen ersten Endgerätes, insbesondere zur Steuerung des Stromsparmodus eines an einen Bus angeschlossenen Computers, in Abhängigkeit von für das erste Endgerät bestimmten Signalisierungsinformationen, die auf dem Bus übertragen werden, wobei Auswertmittel vorgesehen sind, die für das erste Endgerät bestimmte Signalisierungsinformationen auswerten und in Abhängigkeit von dem Ergebnis der Auswertung ein Steuersignal für das erste Endgerät erzeugen,
**dadurch gekennzeichnet**,
daß die Auswertmittel durch mindestens ein weiteres, ebenfalls an den Bus angeschlossenes Endgerät (TE1, TE2, TE3) zur Verfügung gestellt werden, und das von den Auswertmitteln des weiteren Endgerätes (TE1, TE2, TE3) erzeugte Steuersignal über den Bus übertragen und von einer Schnittstellenkarte (31) des ersten Endgerätes (3) als Steuerbefehl erkannt wird, worauf ein bestimmter Modus oder eine bestimmte Funktion des Endgerätes (3) ausgelöst wird.

2. Verfahren nach Anspruch 1, bei dem der Stromsparmodus eines an den Bus angeschlossenen Computers, insbesondere eines Personal Computers, gesteuert wird, **dadurch gekennzeichnet,** daß
a) ankommende Signalisierungsinformationen durch das weitere Endgerät (TE1, TE2, TE3) dahingehend ausgewertet werden, daß überprüft wird, ob die Signalisierungsinformationen für den Computer bestimmt sind,
b) bei einem positiven Ergebnis der Überprüfung ein Steuersignal erzeugt wird, das eine Schnittstellenkarte (31) des Computers (3) als Befehl zum Beenden des Stromsparmodus des Computers (3) erkennt, und
c) daraufhin eine Beendigung des Stromaparmodus ausgelöst wird.

3. Verfahren nach Anspruch 1 oder 2, **dadurch gekennzeichnet,** daß die Signalisierungsinformationen, in deren Abhängigkeit bestimmte Modi oder Funktionen des ersten Endgerätes (3) gesteuert werden, auf dem D-Kanal eines ISDN-Busses gesendete Protokolldatenelemente, insbesondere betreffend den Aufbau einer Telekommunikationsverbindung zwischen einem rufenden Endgerät und dem ersten Endgerät (3) sind.

4. Verfahren nach Anspuch 3, **dadurch gekennzeichnet,** daß das Steuersignal ein D-Kanal Datenpaket mit einem festgelegten Merkmal ist, das vom überprüfenden Endgerät (TE1, TE2, TE3) an die zugehörige Vermittlungsstelle (V) gesendet und von einer passiven ISDN-Karte (31) des ersten Endgeräts (3) über den ISDN E-Kanal mitgehört wird, wobei bei Vorliegen des festgelegten Merkmals ein Modus oder eine Funktion des ersten Endgerätes (3) durch ein entsprechendes Signal der passiven ISDN-Karte (31) ausgelöst wird.

5. Verfahren nach Anspruch 4, **dadurch gekennzeichnet,** das es sich bei dem festgelegten Merkmal um einen bestimmten Wert eines oder mehrere Bytes des Datenpakets handelt.

6. Verfahren nach Anspruch 4, **dadurch gekennzeichnet,** das es sich bei dem festgelegten Merkmal um ein Datenpaket mit einer falschen Checksumme, insbesondere ein Datenpaket mit einer definiert falschen Checksumme handelt.

7. Verfahren nach Anspruch 4, **dadurch gekennzeichnet,** das es sich bei dem festgelegten Merkmal um ein zu kurzes oder zu langes Datenpaket handelt.

8. Verfahren nach Anspuch 3, **dadurch gekennzeichnet,** daß das Steuersignal ein D-Kanal Datenpaket mit einem zwischen Computer (3) und Endgerät (TE1, TE2, TE3) festgelegten Terminal Endpoint Identifier (TEI) ist, das vom überprüfenden Endgerät an die zugehörige Vermittlungsstelle (V) gesendet und von der Vermittlungsstelle (V) mit einem Datenpaket mit identischem Terminal Endpoint Identifier (TEI) beantwortet wird, wobei eine passive ISDN-Karte (31) des ersten Endgeräts (3) die D-Kanal Datenpakete filtert und bei Empfang des festgelegten Terminal Endpoint Identifier (TEI) ein Signal zur Auslösung eines bestimmten Modus oder einer bestimmten Funktion des ersten Endgerätes (3) erzeugt.

9. Verfahren nach mindestens einem der Ansprüche 2 bis 8, **dadurch gekennzeichnet,** daß der Stromsparmodus des Computers dadurch beendet wird, daß ein Interrupt-Signal an den Hauptprozessor des Computers gesendet wird.

10. Verfahren nach mindestens einem der Ansprüche 2 bis 8, **dadurch gekennzeichnet,** daß der Stromsparmodus des Computers durch ein extra dafür vorgesehenes Signal (Power-Management Signal) ausgelöst wird, das von der Schnittstellenkarte bzw. Bausteinen der Schnittstellenkarte an den Hauptprozessor des Computers gesendet wird.

11. Verfahren nach mindestens einem der Ansprüche 1 bis 10, **dadurch gekennzeichnet,** daß eine Überprüfung, ob ankommende Signalisierungsinformationen für den Computer bestimmt sind, eine Auswertung von Datenelementen der Schicht 3 beinhaltet, insbesondere von Schicht 3 Datenelementen des standardgemäßen ISDN SETUP Protokolldatenelements.

12. Verfahren nach Anspruch 11, **dadurch gekennzeichnet,** daß die Zieladresse (CALLED PARTY NUMBER) und die Dienstekennung ausgewertet werden.

13. Telekommunikationsanordnung zur Durchführung des Verfahrens nach Anspruch 1 mit einem ersten Endgerät, insbesondere einem Computer, und mindestens einem weiteren Endgerät, die an einen gemeinsamen Bus angeschlossen sind, wobei das erste Endgerät über eine Schnittstellenkarte an den Bus angeschlossen ist,
**dadurch gekennzeichnet,** daß
a) das weitere Endgerät (TE1, TE2, TE3) Auswertmittel zum Auswerten ankommender Signalisierungsbefehle und Steuermittel zur Erzeugung eines Steuersignals in Abhängigkeit von dem Ergebnis der Auswertung aufweist, und
b) die Schnittstellenkarte (31) des ersten Endgeräts (3) Erkennungsmittel (312) aufweist, die ein entsprechendes Steuersignal des weiteren Endgerätes (TE1, TE2, TE3) auf dem gemeinsamen Bus erkennen und bei Vorliegen eines derartigen Steuersignal einen bestimmten Modus bzw. eine bestimmte Funktion des ersten Endgerätes auslösen.

14. Anordnung nach Anspruch 13 zur Steuerung des Stromsparmodus eines an den Bus angeschlossenen Computers, **dadurch gekennzeichnet,** daß
a) die Auswertmittel ankommende Signalisierungsbefehle dahingehend auswerten, ob ein Verbindungsaufbau zum Computer (3) erfolgen soll, und
b) die Erkennungsmittel (312) bei Vorliegen eines Steuersignals des weiteren Endgeräts (TE1, TE2, TE3) ein Abschalten des Stromsparmodus des Computers (3) auslösen.

15. Anordnung nach Anspruch 13 oder 14, **dadurch gekennzeichnet,** daß das weitere Endgerät (TE1, TE2, TE3) und das erste Endgerät (3) an eine ISDN-Schnittstelle angeschlossen sind und über einen Netzabschluß (NT) mit einer Vermittlungsstelle (V) in Verbindung stehen, wobei die Schnittstellenkarte als interne oder externe passive ISDN-Karte ausgebildet ist.

16. Anordnung nach Anspruch 15, **dadurch gekennzeichnet,** daß als Erkennungsmittel ein auf der passiven ISDN-Karte (31) angeordneter ISDN-Controller (312) verwendet wird.

17. Anordnung nach mindestens einem der Ansprüche 13 bis 16, **dadurch gekennzeichnet,** daß die Auswertmittel und die Steuermittel einen Mikroprozessor aufweisen.

18. Anordnung nach mindestens einem der Ansprüche 13 bis 17, **dadurch gekennzeichnet,** daß das die Auswertmittel und die Steuermittel aufweisende Endgerät als eigenständiges Gerät ausgebildet ist, dessen Funktion im wesentlichen die Steuerung bestimmter Modi oder Funktionen des ersten Endgerätes ist.

19. Anordnung nach mindestens einem der Ansprüche 13 bis 17, **dadurch gekennzeichnet,** daß als Überprüfungsmittel und Steuermittel bereits vorhandene Hardwarekomponenten, insbesondere Mikroprozessoren üblicher Endgeräte eines ISDN-Telekommunikationsanschlusses, insbesondere eines ISDN-Telefons oder eines ab-Adapters, verwendet werden.
